# DEMANDE DE BREVET EUROPEEN

(11) **EP 4 616 718 A1**
(43) Date de publication de la demande: **17.09.2025**
(21) Numéro de dépôt: 24163947.5
(22) Date de dépôt: 15.03.2024
(51) Int. Cl.: A23G 3/36, A23G 3/38, A23G 3/42, A23G 3/48, A23L 29/25, A23L 29/256, A23L 33/10

(54) **COMPLÉMENT NUTRITIONNEL SOUS FORME GÉLIFIÉE**

(71) Demandeur: Kares-Up, 69007 Lyon (FR)
(72) Inventeur: DA COSTA, Raphaëlle, 69007 LYON (FR); CHARRE, Florelle, 34740 MONTPELLIER (FR)
(74) Mandataire: Germain Maureau

(57) **Abrégé**

Complément nutritionnel sous forme gélifiée, comprenant une matrice à base de gomme arabique et d'au moins un carraghénane, au moins un principe actif distribué dans ladite matrice, ledit complément nutritionnel possédant une force à l'enfoncement allant de 4 N à 25 N mesurée avec un texturomètre équipé d'un module de compression de 25 mm appliquant une force de compression sur ledit complément nutritionnel jusqu'à son enfoncement à demi-hauteur dudit complément nutritionnel, pendant une période qui va de 7 à 13 secondes.

## Description

La présente invention concerne un complément nutritionnel se présentant sous une forme gélifiée, comprenant au moins un principe actif ayant un effet nutritionnel ou physiologique.

Un complément nutritionnel selon l'invention inclut un complément alimentaire ainsi que tout aliment fonctionnel. Il n'exerce pas d'action thérapeutique et n'a pas vocation à prévenir ou traiter une maladie, ce n'est pas un médicament.

Un complément alimentaire selon l'invention contient des nutriments, en particulier vitamines, sels minéraux, oligoéléments, des plantes, ainsi que toute autre substance nutritionnelle et a pour but de pallier les carences alimentaires d'un régime alimentaire régulier induites par une situation particulière telle qu'une suractivité, une grossesse, une période de stress, la croissance, le vieillissement..., d'un régime alimentaire particulier tel que celui des végétariens et des végétaliens, ou même d'un régime alimentaire régulier en vue de l'amélioration d'un état. Dans un complément alimentaire, chacun des ingrédients est en une teneur déterminée, correspondant à une dose précise de l'apport. Une définition officielle en est donnée par la Directive-2002/46/CE.

Un aliment fonctionnel selon l'invention est un aliment que l'on a modifié pour lui conférer des propriétés à effet nutritionnel ou physiologique supplémentaires. Il se consomme généralement dans sa forme d'aliment.

Les compléments alimentaires sont disponibles sous forme solide telle que capsule, comprimé, poudre, ou sous forme liquide telle que sirop, ampoule buvable.

Une présentation sous forme de bonbon gélifié, plus ludique, aussi appelée gummies (gummy au singulier), a été récemment développée et connait un essor fulgurant. Comme les formulations classiques de complément alimentaire, les gummies commercialisés proposent une palette d'indications allant des bienfaits pour les cheveux et les phanères au renforcement des défenses immunitaires, en passant par l'amélioration de la qualité du sommeil, la perte de poids, la diminution du stress, l'entretien de la mémoire....

Ils sont fabriqués à partir de gélifiants généralement naturels choisis parmi la gélatine, la pectine ainsi que l'amidon. Pour différentes raisons, l'utilisation de la gélatine, majoritairement d'origine animale, est controversée. La gomme d'acacia (ou gomme arabique) est aussi employée comme gélifiant, mais elle conduit à une texture assez dure, plus proche de la pastille que du gummy. S'agissant de l'amidon, il fait appel à une technologie spécifique qui n'en permet pas une utilisation généralisée. A ce jour, la fabrication à l'échelle industrielle des gummies ne repose donc réellement que sur la seule pectine.

La présente invention apporte une alternative à la pectine qui permet de surmonter les problèmes de la gélatine, de la gomme d'acacia (ou gomme arabique) et de l'amidon.

Par ailleurs, en raison de sa proximité gustative du bonbon, l'inconvénient de la plupart des gummies réside dans leur teneur en sucres très élevée. Ces sucres sont notamment le saccharose, le sirop de glucose, le sirop de blé, le sucre de canne, les fructo-oligosaccharides qui constituent la fraction pondérale la plus importante des gummies. Des formes « sans sucre » ont été élaborées comprenant des sucres de substitution, mais un surdosage en édulcorant n'est pas à écarter.

Les gummies disponibles ont en outre le désavantage, par rapport aux autres compléments alimentaires, de ne contenir que des quantités assez faibles d'ingrédients actifs. Ceci résulte de la teneur élevée en ingrédients nécessaire à leur fabrication pour obtenir une texture gélifiée.

L'invention apporte un complément nutritionnel, sous forme gélifiée, qui permet de surmonter les obstacles précités. Grâce à l'invention, on peut disposer d'abord d'un complément nutritionnel ne recourant pas à la pectine et présentant une texture aussi moelleuse, pouvant contenir des sucres et/ou des édulcorants, mais aussi d'un complément nutritionnel qui peut être essentiellement exempt de sucres et d'édulcorants, tout en conservant sa consistance gélifiée, ni collante, ni croquante.

Selon l'invention, il a été découvert que l'utilisation d'un mélange de gomme arabique et de carraghénane pour fabriquer la matrice des gummies satisfaisant l'objectif précité et permettait d'intégrer, dans la matrice, une quantité de principes actifs voisine de celles des compléments alimentaires classiques et proche, voire supérieure à celle des gummies connus, en fonction du ou des principes actifs incorporés.

Avant d'aborder l'invention plus en détails, la définition de certains termes employés dans le présent texte est précisée.

Par complément nutritionnel sous forme gélifiée, on entend un complément présentant une certaine souplesse sous la pression des doigts. Il possède une texture entre celle de la pâte de fruit et celle de la pastille et se suce plutôt qu'il ne se croque, ou fond dans la bouche.

Par forme de bonbon gélifié, on entend une confiserie qui peut être aromatisée et/ou colorée, ayant la texture d'une gomme telle que décrite ci-dessus, se rapprochant gustativement du bonbon.

Par essentiellement exempt de sucre(s) et/ou d'édulcorant(s), on entend qu'aucun sucre/édulcorant n'a été ajouté, le(s) seul(s) sucre(s) et/ou édulcorant(s) susceptible(s) d'être présent(s) dans le gummy étant apporté(s) par le principe actif ou un additif comme un arôme ou une charge. Ainsi, à titre d'exemple, des fructo-oligosaccharides peuvent apportés par les fruits ou extraits de fruits comme le kiwi.

Le terme « matrice » correspond à la fraction gomme(s) arabique(s) et carraghénane(s) et comprend éventuellement les additifs. Tous les ingrédients constitutifs, à savoir le ou les principes actifs, les excipients, ou encore additifs, sont répartis dans la matrice. Certains ingrédients d'un complément nutritionnel peuvent avoir à la fois un rôle de principe actif et d'additif.

Comme mentionné précédemment, l'invention apporte un complément nutritionnel sous forme gélifiée, permettant de résoudre les problèmes rencontrés par les compléments connus. Il répond à la définition suivante.

Un complément nutritionnel sous forme gélifiée de l'invention, comprend une matrice à base de gomme arabique et d'au moins un carraghénane, au moins un principe actif distribué dans ladite matrice, et il possède une force à l'enfoncement allant de 4 N à 25 N mesurée avec un texturomètre équipé d'un module de compression de 25 mm appliquant une force de compression sur ledit complément nutritionnel jusqu'à son enfoncement à demi-hauteur dudit complément nutritionnel, pendant une période qui va de 7 à 13 secondes.

La matrice telle que définie ci-dessus représente avantageusement de 30 à 99,9% en poids par rapport au poids du complément nutritionnel, de préférence 30 à 80%, voire de 35 à 75%. En-deçà de 30%, la composition a tendance à présenter une texture plus molle et collante ; l'invention permet d'introduire une teneur en principe(s) actif(s) pouvant atteindre 30% en poids de principe(s) actif(s) par rapport au poids du complément nutritionnel, en fonction de la nature du ou des principes actifs. Au sein de l'intervalle indiqué, la proportion de la matrice peut varier, notamment en fonction du ou des principes actifs.

Pour parvenir à un complément nutritionnel de l'invention dans une texture optimale, il comprend avantageusement de 15 à 50% en poids de gomme arabique par rapport au poids du complément nutritionnel, mieux encore, de 15 à 45% en poids de gomme arabique par rapport au poids du complément nutritionnel. La teneur de la gomme arabique sera bien entendu ajustée selon que le gummy comprend ou ne comprend pas de sucre(s) et/ou d'édulcorant(s), cette teneur étant choisie parmi les valeurs basses de cet intervalle lorsqu'il en comprend et parmi les valeurs hautes de cet intervalle lorsqu'il n'en contient pas.

La teneur en carraghénane(s) est généralement inférieure à celle de la gomme arabique, elle va de préférence de 0,1 à 35% en poids par rapport au poids du complément nutritionnel, mieux encore de 0,1 à 20%.

L'invention est ci-après décrite plus en détails avec des mises en oeuvre particulières, les caractéristiques mentionnées pouvant être considérées seules ou en combinaison les unes avec les autres.

Comme énoncé précédemment, la matrice d'un complément nutritionnel de l'invention est composée au moins de gomme arabique et de carraghénane. La fraction de gomme arabique peut provenir de plusieurs gommes arabiques d'origines différentes ou non. De même, la fraction de carraghénane peut comprendre un ou plusieurs carraghénanes. Selon une variante, le ou les carraghénanes sont choisis parmi les carraghénanes iota et leurs mélanges. Elle peut aussi contenir d'autres ingrédients qui vont contribuer à la bonne texture du gummy, en faciliter la formulation, en améliorer les qualités organoleptiques, en agrémenter l'apparence ou le goût.... Ainsi, elle peut comprendre des additifs alimentaires notamment choisis parmi des arômes, des agents de texture différents d'une gomme arabique et d'un carraghénane, des agents antioxydants, des agents de charge, des émulsifiants, des colorants, des conservateurs, des correcteurs d'acidité, des huiles, des cires, des triglycérides, cette liste d'additifs n'étant pas exhaustive. Si nécessaire, l'homme du métier peut faire appel à ses connaissances générales pour recourir à d'autres additifs, sans faire preuve d'activité inventive.

Parmi ces additifs, un complément nutritionnel de l'invention comprend avantageusement un ou des arômes. Effectivement, certains principes actifs ont un goût désagréable comme le collagène marin qui a un goût prononcé de poisson, qu'il est indispensable de masquer, notamment pour que le consommateur ait plaisir à suivre sa cure.

Ainsi, des extraits de fruits rouges camouflent le goût marin et donne en outre au gummy une couleur framboise très attractive. Un extrait d'hibiscus donne un bon goût acidulé ainsi qu'une teinte pourpre. Un arôme d'extrait de citron masque complètement le goût de poisson avec une saveur de tarte citron meringuée.

Selon une mise en oeuvre avantageuse d'un gummy essentiellement exempt de sucre et/ou d'édulcorant, la matrice comprend de la glycérine, de préférence en une proportion de 10 à 20%, par exemple de 13% à 18% en poids par rapport au poids d'un complément nutritionnel. La glycérine est préférentiellement d'origine végétale.

Le ou les principes actifs d'un complément nutritionnel selon l'invention sont notamment choisis parmi ceux contenus dans les compléments alimentaires classiques, tels que des végétaux, des extraits végétaux, des extraits animaux, des nutriments, en particulier vitamines, sels minéraux, oligoéléments, ainsi que toute autre substance minérale ou organique ayant un effet nutritionnel ou physiologique, d'origine naturelle ou synthétique. Il a été constaté que le choix d'une matrice selon l'invention permet d'intégrer certains principes actifs en proportions élevées par rapport aux compléments alimentaires connus. Avantageusement, ils sont d'origine naturelle et notamment sous forme d'extraits naturels d'origine végétale ou d'origine marine.

Ainsi, le ou les principes actifs peuvent être choisis parmi les fruits et des extraits de fruits comme ceux sélectionnés parmi les kiwis verts, les agrumes, l'acérola, le cassis ; les plantes et des extraits de plantes comme celles sélectionnées parmi *Dracocephalum moldavica,* le chanvre, le millepertuis, la passiflore ; des extraits de produits marins comme des peptides de collagène ou des glycosaminoglycanes tels que l'acide hyaluronique.

Comme indiqué précédemment, la teneur en principe(s) actif(s) peut atteindre 30% en poids par rapport au poids du complément nutritionnel ; elle peut être de l'ordre de 5 à 15%.

Un complément nutritionnel de l'invention a un poids allant de 1 à 10 g, de préférence de 2 à 6 g, mieux encore de 2,5 à 3 g. Il contient une dose de principe(s) actif(s) qui détermine sa prise en une ou plusieurs fois par jour, généralement en plusieurs fois.

L'invention concerne aussi un procédé de fabrication d'un complément nutritionnel sous forme gélifiée de l'invention qui comprend les étapes suivantes :
a) On mélange au moins une gomme arabique et un carraghénane, un principe actif et de l'eau, à une température de l'ordre de 40 à 60°C pour obtenir une pâte homogène ;
b) On verse cette pâte dans des moules ;
c) On sèche à l'étuve à une température de l'ordre de 60°C pendant au moins 5 heures, de préférence au moins 8 heures et mieux encore au moins 24 heures pour obtenir le complément nutritionnel.

Le mélange de l'étape a) peut comprendre en outre tout additif alimentaire tel qu'indiqué précédemment. Selon une mise en oeuvre particulière du procédé, le mélange comprend de la glycérine. Il peut aussi contenir de l'acide citrique.

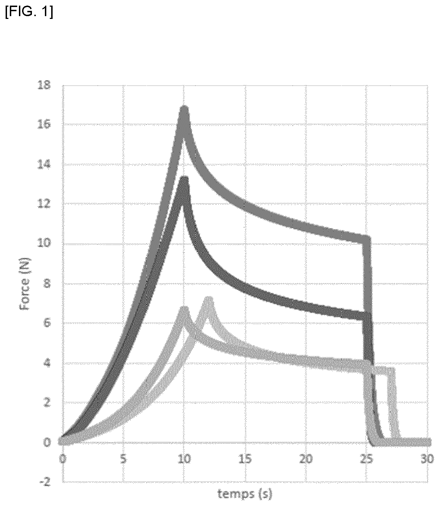

La présente invention est ci-après illustrée par des exemples décrivant des modes de réalisation particulier de l'invention, mettant en lumière ses avantages, sans bien entendu que l'invention y soit restreinte, ainsi qu'à l'appui de la [Fig. 1] qui représente la consistance des gummies exprimée par la force (en N) appliquée par le texturomètre en fonction du temps.

### Exemple 1 : Protocole de fabrication d'un complément nutritionnel de l'invention

La première étape consiste à porter un mélange, dit mélange (a), des ingrédients du complément nutritionnel, à savoir au moins la gomme arabique, le carraghénane et le principe actif, et éventuellement les additifs, et à mélanger jusqu'à l'obtention d'une pâte homogène.

La deuxième étape consiste à verser ladite pâte dans des moules. Les moules employés sont des moules amidon, qui sont soit fabriqués en amidon, soit recouverts d'amidon.

Les gummies sont ensuite mis à l'étude à 60°C pendant au moins 5 heures sous flux d'air.

Les moules amidon sont avantageux en ce qu'ils contribuent efficacement à la déshydratation des gummies. Du fait d'un séchage plus rapide de l'amidon par rapport aux gummies, au cours de l'étape de séchage, l'amidon capte l'eau des gummies, puis sèche grâce au flux d'air circulant dans l'étude et est de nouveau capable d'absorber l'eau des gummies pour obtenir un complément nutritionnel de l'invention. Selon la quantité de gummies à sécher, la durée de séchage est augmentée, elle peut atteindre 24 heures si nécessaire sans affecter la qualité du gummy.

Une fois séchés, les gummies sont brossés afin d'éliminer l'excédent d'amidon et sont placés dans des sachets hermétiques pour ne pas perdre en humidité et ne pas durcir avec le temps.

Les moules utilisés dans le présent exemple ont conduit à l'obtention de gummies d'un poids de 2,5-3 g

### Exemple 2 : Méthodes d'analyses du complément nutritionnel obtenu selon le protocole de l'Exemple 1

### 2.1 Analyse sensorielle

Afin d'évaluer les résultats des essais obtenus, des analyses sensorielles sont réalisées pour chaque formule. Elles consistent à attribuer une note allant de 1 à 5 (5 étant la meilleure) pour chacun des critères ci-dessous, attribuée par un panel de personnes :
- le visuel : la forme et l'aspect (avec la présence d'aspérités ou non) du gummy,
- la facilité de coulage, et
- la sensation en bouche, le gummy doit être tendre, ne pas coller aux dents et ne pas s'émietter.

### 2.2 Texturométrie

Elle est évaluée par un texturomètre dont le principe est d'appliquer une force contrôlée sur le gummy à analyser et de mesurer sa réponse en termes de force et de déformation. Le module utilisé est le suivant : « P/25 cylinder probe ». Il est constitué d'une tige comprenant un cylindre de 25 mm en sa partie inférieure.

L'échantillon est placé sur la plaque du socle du texturomètre. La hauteur de l'échantillon doit être similaire d'un essai à un autre afin d'avoir des résultats comparables. Une force verticale descendante est appliquée par le module. Le module descend sur l'échantillon dans le but de le compresser d'une distance correspondant à la demi-hauteur du gummy. Le module doit rester dans cette position pendant une durée dont la valeur est choisie dans l'intervalle de 7 à 13 secondes, puis il remonte.

Ce test permet ainsi, à l'aide du logiciel associé, d'obtenir des valeurs de force directement liées à la consistance. La consistance est définie comme étant les sensations résultant de la stimulation des récepteurs mécaniques et tactiles, spécialement dans la région de la bouche et variant avec la texture du produit testé.

### Exemple 3 : Formulations de compléments alimentaires de l'invention contenant du ou des édulcorants et résultats d'essais

Les formulations 1, 2, 3 et 4 suivantes ont été préparées selon le protocole décrit à l'Exemple 1 pour obtenir pour chacune d'elles des gummies de 2,5 g à l'issue du procédé de fabrication et ont été analysées par les méthodes décrites à l'Exemple 2.

La formulation 1 comprend un principe actif commercialisé sous le nom Actazin^{®} et consistant en une poudre de kiwis verts agissant sur le transit intestinal et renforçant l'activité prébiotique du microbiote intestinal. Actazin^{®} a un goût très plaisant et ne nécessite pas l'ajout d'arôme supplémentaire.

Les formulations 2 et 3 comprennent un principe actif commercialisé sous le nom de Cartidyss^{®} composé de peptides de collagène et de glycosaminoglycanes (chondroïtine, glucosamine, acide hyaluronique) issus de co-produits marins, contribuant à soutenir la structure de la peau en favorisant la densification du derme et de sa matrice extracellulaire. Il a un goût prononcé de poisson qui peut être masqué par un arôme, comme par exemple la poudre de fruits rouges.

La formulation 4 comprend un principe actif commercialisé sous le nom Dracobelle^{®} et consistant en un extrait de la plante *Dracocephalum moldavica* agissant sur l'hydratation, de l'élasticité et la densité de la peau.

Toutes les formulations contiennent du sorbitol et du maltitol en tant qu'édulcorants jouant principalement un rôle de charge.

### Formulation 1

**[Tableau 1]**

| Ingrédient | % en poids dans le mélange a)* | % en poids du gummy** |
|---|---|---|
| GA | 9,93 | 18,77 |
| Carraghénane | 9,46 | 17,87 |
| Actazin^{®} | 11,35 | 21,45 |
| Sorbitol | 4,26 | 8,04 |
| Maltitol | 4,26 | 8,04 |
| Acide citrique | 1,18 | 2,23 |
| Eau | 59,56 | 23,60 |
| | 100,00 | 100 |

| | | |
|---|---|---|
| * Teneur en poids dans le mélange a) correspondant à la première étape du procédé ** Teneur en poids par rapport au poids du complément nutritionnel tel qu'obtenu à l'issue du procédé de fabrication | | |

### Formulation 2

**[Tableau 2]**

| Ingrédient | % en poids dans le mélange a)* | % en poids du gummy** |
|---|---|---|
| GA | 9,98 | 20,17 |
| Carraghénane | 9,50 | 19,21 |
| Cartidyss^{®} | 9,50 | 19,21 |
| Sorbitol | 4,28 | 8,65 |
| Maltitol | 4,28 | 8,65 |
| Poudre de fruits rouges | 1,43 | 2,88 |
| Acide citrique | 1,19 | 2,40 |
| Eau | 59,84 | 18,83 |
| | 100,00 | 100,00 |

| | | |
|---|---|---|
| * Teneur en poids dans le mélange a) correspondant à la première étape du procédé ** Teneur en poids par rapport au poids du complément nutritionnel tel qu'obtenu à l'issue du procédé de fabrication | | |

### Formulation 3

**[Tableau 3]**

| Ingrédient | % en poids dans le mélange a)* | % en poids du gummy** |
|---|---|---|
| GA | 9,88 | 19,09 |
| Carraghénane | 9,41 | 18,18 |
| Cartidyss^{®} | 9,41 | 18,18 |
| Sorbitol | 4,24 | 8,18 |
| Maltitol | 4,24 | 8,18 |
| Poudre d'hibiscus | 2,35 | 4,55 |
| Acide citrique | 1,18 | 2,27 |
| Eau | 59,29 | 21,37 |
| | 100,00 | 100,00 |

| | | |
|---|---|---|
| * Teneur en poids dans le mélange a) correspondant à la première étape du procédé ** Teneur en poids par rapport au poids du complément nutritionnel tel qu'obtenu à l'issue du procédé de fabrication | | |

### Formulation 4

**[Tableau 4]**

| Ingrédient | % en poids dans le mélange a)* | % en poids du gummy** |
|---|---|---|
| GA | 10,74 | 20,19 |
| Carraghénane | 10,23 | 19,23 |
| Dracobelle^{®} | 4,09 | 7,69 |
| Sorbitol | 4,60 | 8,65 |
| Maltitol | 4,60 | 8,65 |
| Acide citrique | 1,28 | 2,40 |
| Eau | 64,46 | 33,19 |
| | 100,00 | 100,00 |

| | | |
|---|---|---|
| * Teneur en poids dans le mélange a) correspondant à la première étape du procédé ** Teneur en poids par rapport au poids du complément nutritionnel tel qu'obtenu à l'issue du procédé de fabrication | | |

### Exemple 4 : Formulations de compléments de l'invention sans sucre ajouté, ni édulcorant ajouté et résultats d'essais

Les formulations 5, 6 et 7 suivantes ont été préparées selon le protocole décrit à l'Exemple 1 pour obtenir pour chacune d'elles des gummies de 2,5 g à l'issue du procédé de fabrication et ont été analysées par les méthodes décrites à l'Exemple 2.

La formulation 5 comprend le principe actif Actazin^{®} et les formulations 6 et 7 comprennent le principe actif Cartidyss^{®} cités précédemment.

### Formulation 5

**[Tableau 5]**

| Ingrédient | % en poids dans le mélange a)* |
|---|---|
| GA | 17,11 |
| Carraghénane | 11,62 |
| Actazin^{®} | 10,53 |
| Glycérine | 6,58 |
| Acide citrique | 1,10 |
| Eau | 53,06 |
| | 100,00 |

| | |
|---|---|
| * Teneur en poids dans le mélange a) correspondant à la première étape du procédé | |

### Formulation 6

**[Tableau 6]**

| Ingrédient | % en poids dans le mélange a)* | % en poids du gummy** |
|---|---|---|
| GA | 17,79 | 37,50 |
| Carraghénane | 9,12 | 19,23 |
| Cartidyss^{®} | 9,12 | 19,23 |
| Poudre de fruits rouge (arôme) | 0,80 | 1,68 |
| Glycérine | 6,84 | 14,42 |
| Acide citrique | 1,14 | 2,40 |
| Eau | 55,19 | 5,54 |
| | 100 | 100 |

| | | |
|---|---|---|
| * Teneur en poids dans le mélange a) correspondant à la première étape du procédé ** Teneur en poids par rapport au poids du complément nutritionnel tel qu'obtenu à l'issue du procédé de fabrication | | |

### Formulation 7

**[Tableau 7]**

| Ingrédient | % en poids dans le mélange a)* |
|---|---|
| GA | 17,53 |
| Carraghénane | 8,99 |
| Cartidyss^{®} | 8,99 |
| Arôme citron | 2,25 |
| Glycérine | 6,74 |
| Acide citrique | 1,12 |
| Eau | 54,38 |
| | 100 |

| | |
|---|---|
| * Teneur en poids dans le mélange a) correspondant à la première étape du procédé ** Teneur en poids par rapport au poids du complément nutritionnel tel qu'obtenu à l'issue du procédé de fabrication | |

### Exemple 5 : Résultats des analyses sensorielles et de texture

Analyse sensorielle :
Les formulations 1, 2, 6 et 7 des exemples 3 et 4 ont reçu une note allant de 3 à 5 pour chacun des critères analysés.

Analyse de la texture :
Les résultats pour les formulations 1 (pic à 6,5 N), 2 (pic à 7,5 N), 5 (pic à 13,5 N) et 6 (pic à 17 N) des exemples 3 et 4 sont reportés sur la figure qui représente la force (en N) appliquée par le texturomètre en fonction du temps.

Si les gummies sans édulcorant possèdent une consistance plus élevée que celle des gummies avec édulcorant, tous les gummies ont la texture attendue.

## Revendications

1. Complément nutritionnel sous forme gélifiée, comprenant une matrice à base de gomme arabique et d'au moins un carraghénane, au moins un principe actif distribué dans ladite matrice, ledit complément nutritionnel possédant une force à l'enfoncement allant de 4 N à 25 N mesurée avec un texturomètre équipé d'un module de compression de 25 mm appliquant une force de compression sur ledit complément nutritionnel jusqu'à son enfoncement à demi-hauteur dudit complément nutritionnel, pendant une période qui va de 7 à 13 secondes.

2. Complément nutritionnel selon la revendication 1, **caractérisé en ce qu'**il est exempt de sucre(s) à l'exception de ceux susceptibles d'être apportés par le principe actif et les arômes ou une charge, le cas échéant.

3. Complément nutritionnel selon la revendication 1 ou 2, **caractérisé en ce qu'**il exempt d'édulcorant(s) à l'exception de ceux susceptibles d'être apportés par le principe actif et les arômes ou une charge, le cas échéant.

4. Complément nutritionnel selon l'une quelconque des revendications 1 à 3, **caractérisé en ce que** la matrice représente 30 à 99,9% en poids par rapport au poids du complément nutritionnel.

5. Complément nutritionnel selon l'une quelconque des revendications 1 à 4, **caractérisé en ce qu'**il comprend 15 à 50% en poids de gomme arabique par rapport au poids du complément nutritionnel.

6. Complément nutritionnel selon l'une quelconque des revendications 1 à 5, **caractérisé en ce que** le ou les carraghénanes sont choisis parmi les carraghénanes iota et leurs mélanges.

7. Complément nutritionnel selon l'une quelconque des revendications 1 à 6, **caractérisé en ce qu'**il comprend 0,1 à 35% en poids d'au moins un carraghénane par rapport au poids du complément nutritionnel.

8. Complément nutritionnel selon l'une quelconque des revendications 1 à 7 **caractérisé en ce qu'**il comprend jusqu'à 30% en poids de principe(s) actif(s) par rapport au poids du complément nutritionnel, de préférence de 5 à 15%.

9. Complément nutritionnel selon l'une quelconque des revendications 1 à 8, **caractérisé en ce que** le ou les principes actifs sont choisis parmi des végétaux, des extraits naturels d'origine végétale, animale ou marine, des nutriments, en particulier vitamines, sels minéraux, oligoéléments, ainsi que toute autre substance minérale ou organique, d'origine naturelle ou de synthèse, ayant un effet nutritionnel ou physiologique.

10. Complément nutritionnel selon l'une quelconque des revendications 1 à 9, caractérisé en ce le ou les principes actifs sont choisis parmi les fruits et leurs extraits choisis parmi les kiwis verts, les fruits rouges, les agrumes, l'acérola, le cassis ; les plantes et leurs extraits choisies parmi *Dracocephalum moldavica,* le chanvre, l'hibiscus, le millepertuis, la passiflore ; des extraits d'origine marine ou animale, comme des peptides de collagène ou des glycosaminoglycanes tels que l'acide hyaluronique.

11. Complément nutritionnel selon l'une quelconque des revendications 1 à 10, **caractérisé en ce qu'**il comprend un ou des additifs, notamment choisis parmi des arômes, des agents de texture différents d'une gomme arabique et d'un carraghénane, des agents antioxydants, des agents de charge, des émulsifiants, des colorants, des conservateurs, des huiles, des cires, des triglycérides.

12. Complément nutritionnel selon la revendication 11, **caractérisé en ce qu'**un dit agent de texture est la glycérine.

13. Complément nutritionnel selon l'une quelconque des revendications 1 à 12, **caractérisé en ce qu'**il a un poids allant de 1 à 10 g, de préférence de 2 à 6 g, mieux encore de 2,5 à 3 g.

14. Complément nutritionnel selon l'une quelconque des revendications 1 à 13, **caractérisé en ce qu'**il est sous une présentation choisie parmi un complément alimentaire et un aliment fonctionnel.

15. Procédé de fabrication d'un complément nutritionnel sous forme gélifiée selon l'une quelconque des revendications 1 à 14, **caractérisé en ce qu'**il comprend les étapes suivantes :
a) On mélange au moins une gomme arabique et un carraghénane, un principe actif et de l'eau, à une température de l'ordre de 40 à 60°C pour obtenir une pâte homogène ;
b) On verse cette pâte dans des moules ;
c) On sèche à l'étuve à une température de l'ordre de 60°C pendant au moins 5 heures, de préférence au moins 8 heures et mieux encore au moins 24 heures pour obtenir le complément nutritionnel.

16. Procédé selon la revendication 15, **caractérisé en ce que** le mélange de l'étape a) comprend de l'acide citrique,
